Europäisches Patentamt

European Patent Office

Office européen des brevets

(11) Publication number: **0 437 072 A1**

(12) **EUROPEAN PATENT APPLICATION**

(21) Application number: 90313942.6

(22) Date of filing: **19.12.90**

(51) Int. Cl.⁵: **H04L 12/28**, H04B 10/20

| | |
|---|---|
| The title of the invention has been amended (Guidelines for Examination in the EPO, A-III, 7.3). | London W1N 3AA(GB) |
| (30) Priority: **11.01.90 GB 9000605** | (72) Inventor: **Rowe, Jeremy Mark Tarrant** **24 Copse Hill** **Harlow, Essex CM19 4PL(GB)** Inventor: **Hay, Bryan George** **47 Gilbey Crescent** **Stansted, Essex CM24 8DT(GB)** |
| (43) Date of publication of application: **17.07.91 Bulletin 91/29** | |
| (84) Designated Contracting States: **DE ES FR IT** | (74) Representative: **Dennis, Mark Charles et al** **STC Patents West Road** **Harlow Essex CM20 2SH(GB)** |
| (71) Applicant: **STC PLC** **1B Portland Place** | |

(54) **Point-to-multipoint TDM/TDMA communication system using a packet-based frame structure.**

(57) A packet-based frame structure, particularly for a point-to-multipoint TDM/TDMA network, which is transmitted in both directions thereover but formatted at the basestation. It includes a plurality of spaced apart packets (PK1 to PKn) capable of carrying traffic data and some frames include a skeleton packet (SKL;SRE) which is used for system configuration purposes. The packet structure includes a communication channel field whereby a fixed capacity, bidirectional communication channel is set up for transmitting messages between the basestation and the outstations, such as outstation packet size requirement changes, setting of programmable delays at the outstations, security measures (such as PIN numbers), and configuration messages. Minimal complexity of equipment is required at the outstations whilst allowing flexible capacity allocation.

Fig.1.

## TELECOMMUNICATIONS SYSTEMS

This invention relates to telecommunications systems and in particular to a packet-based frame structure for use therein, especially in a TDM/TDMA network.

In a TDM/TDMA network data transmission from the exchange to the subscribers employs time-division multiplexing (TDM) whereas return transmission uses time-division multiple access (TDMA). One example of such a network is referred to as TPON (Telephony over a Passive Optical Network). The number of subscribers which can be served by a passive distribution network is typically 128. The present invention aims to provide a frame structure which allows higher numbers, typically 400, of subscribers to be served in a street or business TPON environment than hitherto.

According to one aspect of the present invention there is provided a packet based frame structure for use in communications systems, each frame including a plurality of spaced apart packets capable of carrying traffic data, and wherein each said packet includes a communication channel field which is employed for conveying messages at least for system configuration purposes.

According to another aspect of the present invention there is provided a packet-based frame structure for use in communications systems including a base station and a plurality of outstations connected by a point-to-multipoint network and for transmission in both directions between the base station and the outstations, each frame comprising a plurality of spaced apart packets capable of carrying traffic data, and wherein each said packet includes a communication channel field which is employed for conveying messages between the base station and each outstation independently, and vice versa, at least for network configuration purposes.

According to a further aspect of the present invention there is provided a point-to-multipoint TDM/TDMA communications network including a base station and a plurality of outstations and employing a packet-based frame structure, for transmission in both directions therebetween, wherein the frame structure is formatted at the base station, each frame comprising a plurality of spaced apart packets capable of carrying traffic data, wherein each said packet includes a communications channel (COM) field, which fields together provide a fixed capacity, bidirectional communication channel between the base station and each outstation independently at least for network configuration purposes, and wherein each outstation includes intelligence means for interpreting and responding to messages received over the communication channel.

Embodiments of the invention will now be described with reference to the accompanying drawings, in which;

Fig 1 illustrates a system configuration;

Fig 2 illustrates a downstream frame structure;

Fig 3 illustrates a packet structure;

Fig 4 illustrates an upstream frame structure;

Fig 5 illustrates a skeleton packet structure;

Fig 6 illustrates a functional black diagram of a base station, and

Fig 7 illustrates a functional block diagram of an outstation.

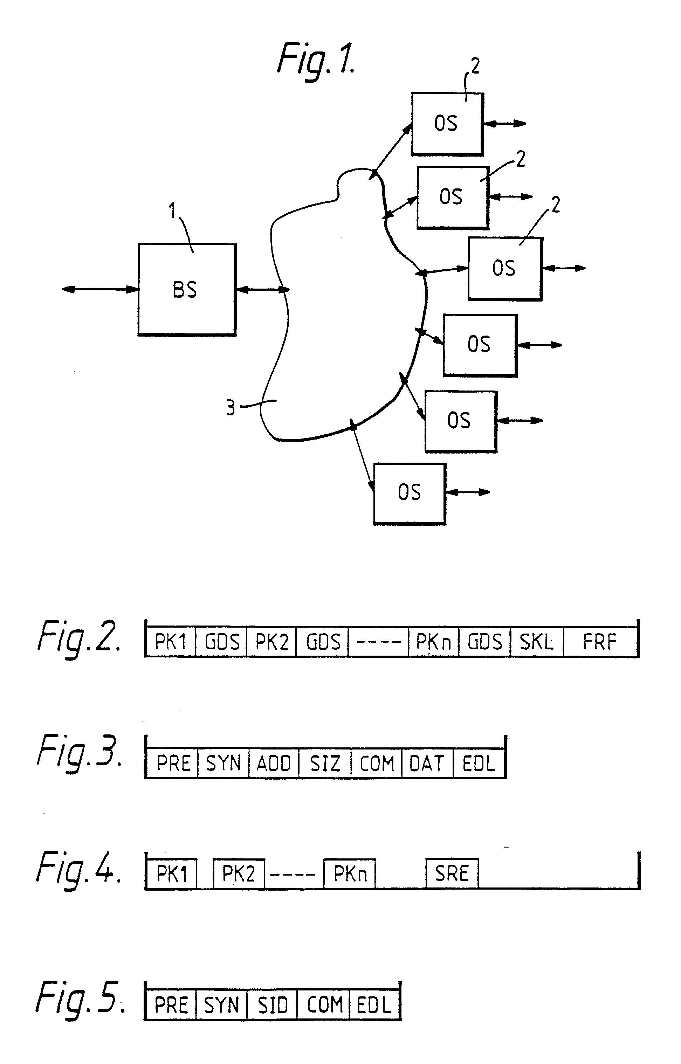

In the system configuration shown in Fig 1 there is a network node 1, also referred to as a base station (BS) and a plurality (n) of customer nodes 2, also referred to as outstations (OS) coupled together by a point-to-multipoint network 3, such as a passive fibre optic network. A TDM/TDMA network is assumed for this description, i.e. transmission in the direction from the base station BS 1 to the outstation 2 employs TDM, whereas transmission in the direction from the outstations 2 to the base station 1 employs TDMA.

Two related frame structures are required; one from BS to OS (downstream) and one from OS to BS (upstream).

Each downstream (broadcast) frame may be constructed as shown in Fig 2. The frame consists of n packets of data (PK1 to PKn), which packets are separated by a short guard space GDS. A skeleton packet (SKL) is appended after the final data packet-guard space sequence. The skeleton packet is used for system configuration. The remainder of the frame is filled with "frame fill" characters (FRF). The guard space and frame fill characters maintain clock recovery systems at the outstations OS 2 in the absence of broadcast data, thus maintaining a fully synchronous system as well as allowing for system expansion.

Each packet can be constructed as in Fig 3 and thus includes a preamble field (PRE), a synchronisation word field (SYN), an address field (ADD), a size of data field (SIZ), a communication channel field (COM), a user data field (DAT) and an end of packet delimiter field (EDL). The SIZ field determines the size of the packet and hence the capacity allocated to the receiving node. If an SIZ field is not included then the packet size can be deduced at the outstation by detecting the end delimiter EDL. In order that single or burst errors do not corrupt either the addressing or packet size information, error correcting codes are used.

Fuzzy matching techniques can be used to enable recognition of the start of a packet even when there is a high error rate over the transmission medium. For fuzzy matching, sequences within a certain Hamming distance of a given code are deemed to be the start of packets. The data field is checked by a CRC (cyclic redundancy check) which allows channel performance monitoring, i.e. by including a CRC field in the frame structure.

The COM field is the key to the system flexibility. This field provides a fixed-capacity, bidirectional communication channel between the base station BS and each outstation OS independently. A messaging protocol such as HDLC (high level data link control) is used to convey messages between the base station BS 1 and OS 2. It is these messages that contain information such as OS packet size requirements, settings for OS programmable delays, security measures (such as PIN numbers) and configuration messages.

In the upstream (OS to BS) direction the packet structure remains the same (Fig 3). Each OS inspects the downstream traffic for correctly addressed packets, each OS being uniquely addressed. When a valid packet is recognised, the OS releases a packet in the upstream direction. In this manner packets from each OS are interleaved in the upstream frame, separated by quiet periods, as depicted in Fig 4.

In order that the upstream frame is used efficiently, a marshalling protocol is employed. This provides compensation for varying propagation delays between the outstations and the base station and has the effect of ensuring that there is a minimum gap between upstream packets despite the outstations being at various distances from the base station. The mechanism for implementing this is to provide a programmable delay function at each outstation, which is programmed via the COM channel to equalise the total round-trip delay of each outstation as seen at the base station.

The skeleton packet structure is illustrated in Fig 5. It includes a preamble field (PRE), a synchronisation word field (SYN), a skeleton identification (SID), a communications channel field (COM) and an end delimiter field (EDL).

During network (system) configuration each outstation 2 seeks to set up packet traffic by seizing the skeleton packet. The position of the outstation response to the skeleton packet, i.e. the position of SRE, is measured at the base station 1 and the delay set appropriately by sending a message to the outstation via the COM channel. In the case of two or more outstations responding to the skeleton packet at the same time, the base station may detect a collision, in which case the competing outstations are instructed to try again after a respective random time. If the base station fails to detect a collision, the response from one outstation masking the response from others, a dialogue will commence between the base station and the successful outstation. This dialogue is also received by the outstations which failed to make contact. The unsuccessful outstations then have to wait for a respective random time before trying again.

The downstream frame structure is defined by the base station. Because the outstations simply respond when addressed, this also dictates the format of the upstream traffic. The only intelligence required at an outstation, which is thus of a simple design, is that which is needed to interpret the COM channel messages and set a programmable delay. The bulk of the system complexity is concentrated at the base station. This means that the cost per outstation is minimised.

Since each packet has sizing information incorporated in it, the network controller (base station) can reallocate capacity on a frame-by-frame basis. This allows time-of-day switching, network reconfiguration to be performed with ease together with matching network capacity allocation to customer requirements. Thus flexibility of operation is provided.

For ensuring security, each packet data payload can be individually encoded using PIN numbers that correspond to each outstation. Thus the downstream traffic which is received by all outstations will only be meaningful to the correct recipient.

In addition broadcast services could be transmitted in the GDS and FRF areas to further utilise the downstream transmission bandwidth. Any interaction with these services could be handled through the COM channel.

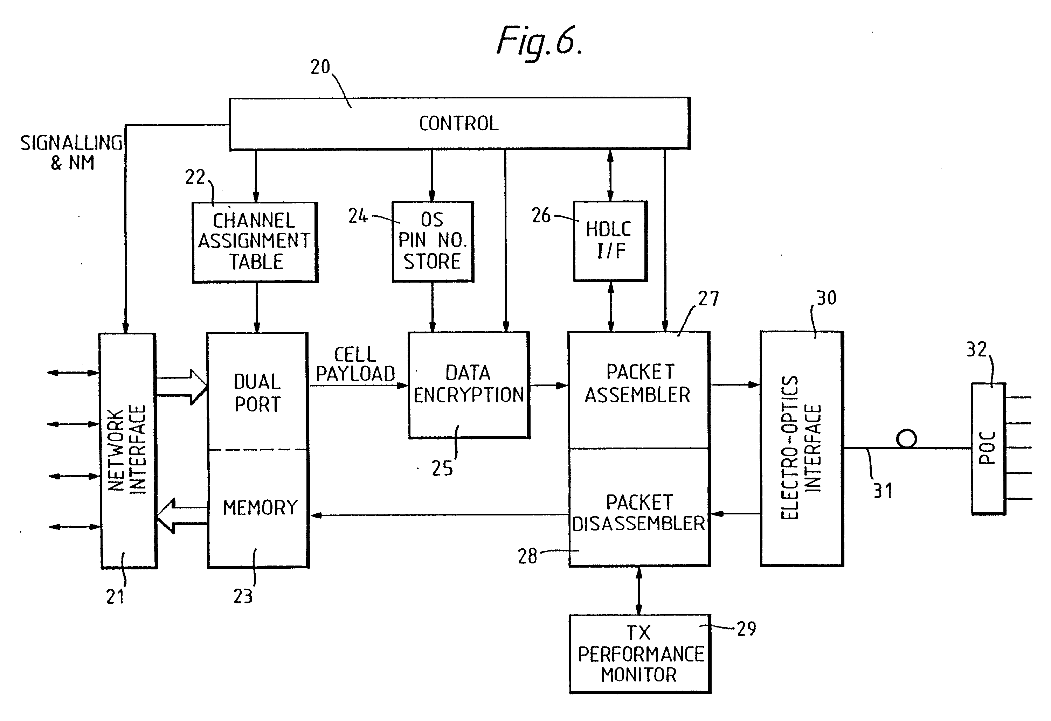

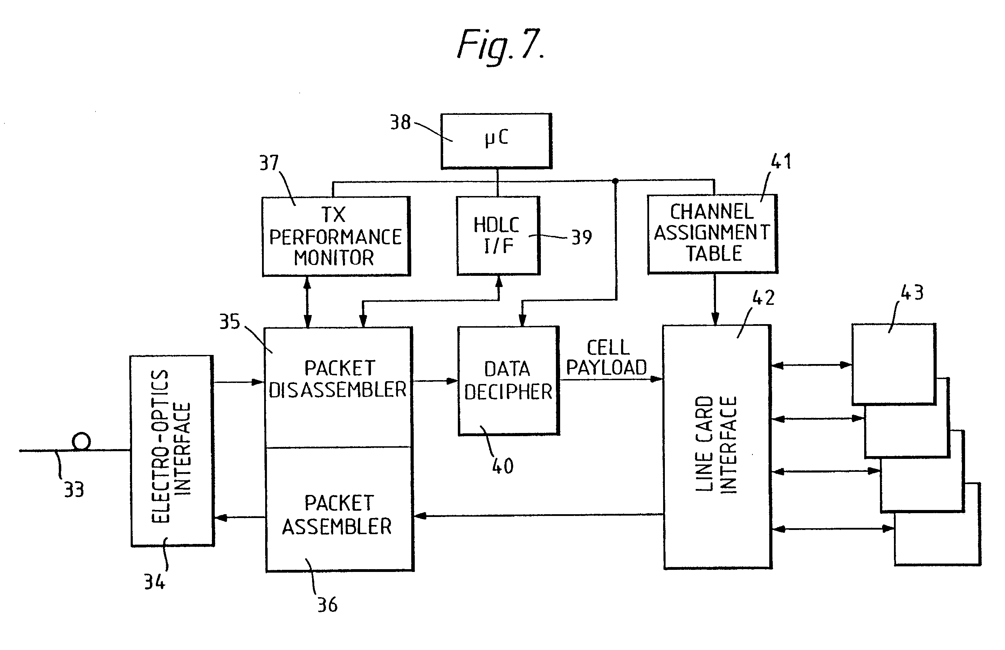

Figs 6 and 7 indicate, respectively, functional block diagrams of a base station and an outstation. As will be appreciated from the above the complexity of the system is at the base station which comprises a control block 20, a network interface 21, a channel assignment table 22, a dual port memory 23, an outstation PIN number store 24, a data encryption block 25, an HDLC interface 26, a packet assembler 27, a packet dis-assembler 28, a transmission performance monitor 29, and an electro-optics interface 30. An optical fibre 31 couples the basestation to a passive optical network including passive optical coupler (POC) 32 and thence to the outstations. The outstation illustrated in Fig 7, which is coupled to the base station via an optical fibre 33, includes an electro-optics interface 34, a packet dis-assembler 35, packet assembler 36, transmission performance monitor 37, a controller (microcontroller) 38, an HDLC interface 39, data decipher block 40, channel assignment table 41, line card interface 42 and subscribers 43 connected thereto.

The number of functional blocks at an outstation which are specifically for the proposed frame structure are relatively small. The microcontroller 38 and the HDLC interface 39 are present whatever the structure, as are elements like the transmission performance monitor 37, the packet assembler 36 and packet dis-assembler 35 and the interfaces 34 and 42. This leaves a few relatively straightforward blocks of logic to perform the other functions, namely data decipher and channel assignment. Each outstation basically only has to know its own deciphering system. The complexity is at the basestation, which is shared amongst the outstations. The formatting of the frames is performed at the basestation. The complexity is at the control block 20 which interacts with the packet assembler 27. The packet assembler 27 of the basestation works together with the packet dis-assembler of the outstations such as 35, across the passive optical network, as do the assemblers 36 and the dis-assembler 28. The way in which the packets are assembled is under the control of the control block 20. Data is encrypted at 25 in accordance with the appropriate outstation PIN provided by store 24, switching to a different encryption scheme for each outstation; store 24 instructing data encryption block 25 to switch to different encryption schemes for different outstations. The PIN numbers can be changed, if required, at the outstation, for example a sequence of PIN numbers may be required in order to maintain security. In which case an appropriate data decipher block will be required and there is an appropriate dialogue between the microcontroller at the outstation and the control block at the basestation via the COM channel of the packet structure with regard to switching between different schemes. It is assumed for the above that the microcontroller 38 has software which can be downloaded in order to achieve this PIN change. The control block 20 supplies signalling and network management information to the network interface 21 and controls the channel assignment via table 22.

Whereas the frame structure described above could be applied over point-to-point links, when applied to TDM/TDMA networks (point-to-multipoint links) advantages are obtained which conventional frame structures have not been able to provide. In particular the proposed frame structure allows a simple network configuration with minimal complexity required at the customer nodes (outstations), allows secure communication in the broadcast network to be simply implemented and allows flexible allocation of capacity (transmission bandwidth) in the network. It is not necessary for each frame to include a skeleton packet. In fact increased efficiency results if skeleton packets are present in only some of the frames. The frame structure is suitable for being line coded i.e. 4B/5B similar to FDDI.

In a particular implementation of this frame structure in a TDM/TDMA point-multipoint network, the transmission bit rate is set at 40.96MBit/s and the frame period at 500 us. The packet structure described above allows trade offs between total network channel capacity, number of active outstations, and variability in outstation distance.

The following table gives examples of system configuration options:

| No Outstations | Max variability (km) | Total channels available |
|---|---|---|
| 16 | 2 | 400 |
| 16 | 4 | 360 |
| 16 | 10 | 240 |
| 32 | 2 | 340 |

Attention is directed to our copending GB Application No 9000606.5 (Serial No      ) (J M T Rowe 3-2-1) which relates to other aspects of TDM/TDMA networks.

## Claims

1. A packet-based frame structure for use in communications systems, each frame including a plurality of spaced apart packets (PK) capable of carrying traffic data, and wherein each said packet includes a communication channel field (COM) which is employed for conveying messages at least for system configuration purposes.

2. A frame structure as claimed in claim 1, wherein in at least some of said frames and following said spaced apart packets (PK) and spaced apart therefrom there is a skeleton packet (SKL) which is employed for system configuration, and wherein said skeleton packet·(SKL) also includes a said communication channel field (COM).

3. A packet-based frame structure for use in communications systems including a basestation (BS) and a plurality of outstations (OS) connected by a point-to-multipoint network (3) and for transmission in both directions between the basestation (BS) and the outstations (OS), each frame comprising a plurality of spaced apart packets (PK) capable of carrying traffic data, and wherein each said packet includes a communication channel field (COM) which is employed for conveying messages between the basestation (BS) and each outstation (OS) independently, and vice versa, at least for network configuration purposes.

4. A frame structure as claimed in claim 3, wherein in at least some of said frames and following said spaced apart packets (PK) and spaced apart therefrom there is a skeleton packet (SKL) which is employed for network
configuration, and wherein said skeleton packet (SKL) also includes a said communication channel field (COM).

5. A frame structure as claimed in claim 4 wherein the network (3) is a TDM/TDMA network, wherein in the broadcast direction between the basestation (BS) and the outstations (OS) and following the skeleton packet (SKL) the remainder of the frame is filled with frame fill characters (FRF), wherein said packets (PK) are spaced apart by guard spaces (GDS), which guard spaces (GDS) and frame fill characters (FRF) serve to maintain synchronism of the system in the absence of broadcast traffic data, wherein the traffic packets comprise a preamble field (PRE), a synchronisation word field (SYN), an address field (ADD), said communication channel field (COM), a traffic data field (DAT) and an end of packet delimiter field (EDL), wherein the traffic packets further include a size of traffic data field (SIZ), and wherein the skeleton packet structure (SKL) comprises a preamble field (PRE), a synchronisation word field (SYN), a skeleton identification field (SID), said communication channel field (COM) and an end of packet delimiter field (EDL).

6. A frame structure as claimed in any one of the preceding claims and including a CRC (cyclic redundancy check) field for monitoring data errors.

7. A point-to-multipoint TDM/TDMA communications network including a basestation (BS) and a plurality of outstations (OS) and employing a packet-based frame structure, for transmission in both directions therebetween, wherein the frame structure is formatted at the basestation (BS), each frame comprising a plurality of spaced apart packets (PK) capable of carrying traffic data, wherein each said packet includes a communication channel (COM) field, which fields together provide a fixed capacity, bidirectional communication channel between the basestation (BS) and each outstation (OS) independently at least for network configuration purposes, and wherein each outstation (OS) includes intelligence means for interpreting and responding to messages received over the communication channel.

8. A network as claimed in claim 7 wherein in at least some of said frames and following said spaced apart packets (PK) and spaced apart therefrom there is a skeleton packet (SKL) which is employed for network configuration, and wherein said skeleton packet (SKL) also includes a said communication channel field (COM).

9. A network as claimed in claim 8 and wherein during network configuration each outstation (OS) seeks to set up packet traffic by seizing a said skeleton packet (SKL) transmitted from the basestation (BS), the position of the outstation response (SRE) to the skeleton packet (SKL) is measured at the basestation (BS) and a programmable delay at the outstation (OS) is set in response to communication channel messages, whereby to equalise the total round trip delay of each outstation as seen at the basestation, wherein the traffic packets include traffic data size information (SIZ) and wherein in response to capacity demand changes at the outstation (OS) messages are sent to the basestation (BS) over the communication channel (COM) to adjust the formatted packet size, and wherein the traffic data of each packet is individually encoded using a respective PIN number for each outstation (OS) whereby the traffic which is received by all outstations (OS) from the basestation (BS) is only meaningful to the intended recipient outstation.

10. A network as claimed in any one of claims 7 to 9 wherein the basestation (BS) and outstations (OS) are connected by a passive optical fibre network (3).

## Fig.1.

## Fig.2.

| PK1 | GDS | PK2 | GDS | ---- | PKn | GDS | SKL | FRF |

## Fig.3.

| PRE | SYN | ADD | SIZ | COM | DAT | EDL |

## Fig.4.

| PK1 | PK2 | ---- | PKn | SRE |

## Fig.5.

| PRE | SYN | SID | COM | EDL |

## Fig.6.

CONTROL — 20

SIGNALLING & NM

22 — CHANNEL ASSIGNMENT TABLE

24 — OS PIN NO. STORE

26 — HDLC I/F

NETWORK INTERFACE — 21

DUAL PORT — 23

MEMORY

CELL PAYLOAD

DATA ENCRYPTION — 25

PACKET ASSEMBLER — 27

PACKET DISASSEMBLER — 28

ELECTRO-OPTICS INTERFACE — 30

31

POC — 32

TX PERFORMANCE MONITOR — 29

EP 0 437 072 A1

## Fig.7.

EP 0 437 072 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,A | EP-A-0 337 619 (BRITISH TELECOMMUNICATIONS) * page 2, lines 13 - 21 * * page 3, lines 26 - 35 @ page 4, lines 26 - 53 @ page 5, lines 15 - 48 @ page 6, lines 19 - 57 * | 1,3,7,2, 4-6,8-10 | H 04 L 12/28 H 04 B 10/20 |
| A | INTERNATIONAL CONFERENCE ON COMMUNICATIONS '86 June 1986, IEEE New York(US) pages 1748 - 1752; T.LE-NGOC: "SR500 - A POINT-TO-MULTIPOINT DIGITAL RADIO SYSTEM" * paragraph 3; figure 2 * | 1-5,7-9 | |
| A | INTERNATIONAL CONFERENCE ON COMMUNICATIONS '84 May 1984, IEEE New York(US) pages 959 - 964; M.T.HEWITT et al.: "A COST EFFECTIVE 19GHz DIGITAL MULTIPOINT RADIO SYSTEM FOR LOCAL DISTRIBUTION APPLICATIONS" * page 964, right-hand column * | 1,3,5,7,9 | |
| A | EP-A-0 100 662 (DAHOD) * abstract * * figures 1-3 * | 1,3,5,6,9 | |
| A | WO-A-8 805 233 (BRITISH TELECOMMUNICATIONS) * page 3, line 17 - page 4, line 12 * * page 10, lines 5 - 32 * * page 28, lines 21 - 23 * * page 32, lines 7 - 9 * | 1,3,5,7,9, 10 | **TECHNICAL FIELDS SEARCHED (Int. Cl.5)** H 04 L H 04 B |

The present search report has been drawn up for all claims

| Place of search | Date of completion of search | Examiner |
|---|---|---|
| The Hague | 11 April 91 | MIKKELSEN C. |